# EUROPÄISCHE PATENTSCHRIFT

(11) **EP 4 197 845 B1**
(45) Veröffentlichungstag und Bekanntmachung des Hinweises auf die Patenterteilung: **28.01.2026**
(21) Anmeldenummer: 22211043.9
(22) Anmeldetag: 02.12.2022
(51) Int. Cl.: B60L 3/10

(54) **VERFAHREN ZUR STEUERUNG DES ANTRIEBS EINES SCHIENENFAHRZEUGS**
METHOD FOR CONTROLLING THE DRIVE OF A RAIL VEHICLE
PROCÉDÉ DE COMMANDE DE L'ENTRAÎNEMENT D'UN VÉHICULE FERROVIAIRE

(30) Priorität: 17.12.2021 DE 102021214590
(43) Veröffentlichungstag der Anmeldung: 21.06.2023
(73) Patentinhaber: Siemens Mobility GmbH, 80997 München (DE)
(72) Erfinder: von Flottwell, Edward, 47829 Krefeld (DE); Greilich, Murad, 91056 Erlangen (DE)
(74) Vertreter: Siemens Patent Attorneys

(56) Entgegenhaltungen:
- EP-A1- 0 826 548
- EP-A1- 0 888 922
- EP-A2- 1 110 798
- WO-A1-2016/119964
- DE-A1- 3 837 908
- DE-A1- 4 333 281

## Beschreibung

Die Erfindung betrifft ein Verfahren zur Steuerung des Antriebs eines Schienenfahrzeugs, mit welchem Torsionsschwingungen von Radsätzen reduziert oder vermieden werden können.

Bei angetriebenen Radsätzen von Schienenfahrzeugen ist das Problem des Auftretens von Torsionsschwingungen bekannt. Dabei wirkt die Radsatzwelle als Torsionsfeder zwischen den beiden Radscheiben. Gegebenenfalls kann das Schwingungssystem auch Teile des Antriebs umfassen. Die Frequenz der Schwingung liegt meist im Bereich von 50-120 Hz, die Dauer kann von wenigen Millisekunden bis über 10 s betragen. Torsionsschwingungen können im Makroschlupf-Bereich des Kraftschlussdiagramms entstehen, nämlich in Bereichen mit negativer Steigung der Kraftschluss-Kennlinie. Die Kraftschluss-Kennlinie eines Schienenfahrzeugs beschreibt die Abhängigkeit des Kraftschlussbeiwerts µ vom Schlupf oder von der Schlupfgeschwindigkeit S (normierte bzw. absolute Differenz zwischen der Umfangsgeschwindigkeit des Rades und der Fahrgeschwindigkeit des Schienenfahrzeugs) und damit die Reibverhältnisse zwischen Rad und Schiene. Der Kraftschlussbeiwert ist insbesondere abhängig von der im Rad-Schiene-Kontakt befindlichen Zwischenschicht, sowie von weiteren Umgebungsbedingungen (wie Temperatur, Ort), Fahrzeuggeschwindigkeit u.a.

Torsionsschwingungen können insbesondere die Radsatzwelle schädigen, und ferner kann ein Rutschen in der Presspassung der Radscheiben auftreten. Darüber hinaus wird der Komfort für die Fahrgäste beeinträchtigt.

Um die nachteiligen Folgen und insbesondere Gefahren durch Torsionsschwingungen zu reduzieren, kann der Radsatz entsprechend dimensioniert werden. Dies ist allerdings mit dem Nachteil eines erhöhten Gewichts und erhöhter Kosten verbunden. Eine andere Möglichkeit besteht darin, das Auftreten von Torsionsschwingungen zu detektieren und dann das Antriebsmoment zu reduzieren, so dass die Schwingungsamplitude sinkt. Dabei wird ein Grenzwert für die Schwingungsamplitude vorgegeben. Nachteilig ist, dass Sensoren für die Erkennung der Torsionsschwingungen notwendig sind, beispielsweise Drehzahl-, Dehnungs- oder Beschleunigungssensoren, und gegebenenfalls weitere Komponenten für den Schwingungsschutz. Ferner ist eine entsprechende Auswerteeinheit notwendig.

Bekannt sind ferner mechanische Tilger, die zur Reduzierung der Torsionsschwingungsamplitude eingesetzt werden, aber das Gewicht und Instandhaltungsaufwendungen erhöhen.

Torsionsschwingungen ließen sich auch vermeiden, indem das Schienenfahrzeug ausschließlich im Mikroschlupf bei niedrigem Kraftschluss betrieben wird. Dies führt aber zu Zugkraftverlust und kann in Bremssituationen, in denen ein hoher Längsschlupf erforderlich sein kann, nicht immer eingehalten werden.

Das Dokument DE 43 33 281 A1 offenbart ein Verfahren zur optimalen Regelung der Antriebs- und Bremskraft von Fahrzeugrädern. Aus dem Dokument EP 0 826 548 A1 ist ein Verfahren zur Regelung des elektrischen Antriebs eines Schienenfahrzeugs bekannt, mittels welchem der Kraftschluss zwischen Rad und Schiene optimal genutzt werden kann. Aus dem Dokument WO 2016/119964 A1 ist ein Verfahren zur Bestimmung des Torsionsmoments einer Radsatzwelle eines Schienenfahrzeugs während des Betriebs bekannt. Das Dokument EP 1 110 798 A2 beschreibt ein Verfahren zur Früherkennung von Haftwertgrenzüberschreitungen bei Schienenfahrzeugen mit elektrischem Gruppenantrieb. Aus dem Dokument DE 38 37 908 A1 ist schließlich ein Verfahren zur Regelung der Antriebs- und/oder Bremskraft von Fahrmotoren eines laufachsenlosen Triebfahrzeugs an der Kraftschlussgrenze der Räder bekannt.

Aufgabe der Erfindung ist es, eine verbesserte Lösung für das beschriebene Problem der Torsionsschwingungen zur Verfügung zu stellen.

Diese Aufgabe wird gelöst durch ein Verfahren mit den Merkmalen des unabhängigen Patentanspruchs 1. Vorteilhafte Ausgestaltungen der Erfindung sind in den abhängigen Patentansprüchen angegeben.

Die Erfindung beruht auf der Erkenntnis, dass Torsionsschwingungen bei Radsatzwellen nur bei bestimmten Bedingungen auftreten bzw. vermehrt mit hoher Amplitude auftreten. Es hat sich gezeigt, dass bestimmte Schlupfgeschwindigkeiten S (oder als gleichwertiger normierter Parameter: bestimmte Werte des Schlupfes) in Kombination mit bestimmten Kraftschlussbeiwerten µ für Torsionsschwingungen auslösend sind und diese fördern. Mit anderen Worten, schädliche Torsionsschwingungen treten vermehrt in einem oder mehreren bestimmten Bereichen des Kraftschlussdiagramms auf.

Die Erfindung sieht vor, dass diese auslösenden Bedingungen bzw. Bereiche des Kraftschlussdiagramms und damit das Einsetzen von Torsionsschwingungen weitestgehend vermieden werden.

Das Verfahren sieht vor, dass im Kraftschlussdiagramm eine Sperrzone definiert wird oder vorgegeben ist, welche den Arbeitsbereich beschreibt, in dem mit Torsionsschwingungen vermehrt, d.h. mit höherer Wahrscheinlichkeit auftreten. Die Sperrzone umfasst also Arbeitspunkte, nämlich bestimmte Wertepaare (µ, S) die im Betrieb weitgehend vermieden werden sollen ("gesperrte Arbeitspunkte").

Im Betrieb des Schienenfahrzeugs wird der aktuelle Arbeitspunkt ermittelt und mit der Sperrzone verglichen. Falls der aktuelle Arbeitspunkt innerhalb der Sperrzone liegt (also einem gesperrten Arbeitspunkt entspricht), wird das Antriebsmoment und damit die Schlupfgeschwindigkeit reduziert, bis die Sperrzone verlassen ist. Danach wird das Antriebsmoment wieder erhöht. Das erfindungsgemäße Verfahren führt also dazu, dass der aktuelle Arbeitspunkt die Sperrzone möglichst schnell durchläuft bzw. weitgehend vermeidet.

Vorzugsweise wird das Antriebsmoment erst dann reduziert, wenn der Arbeitspunkt für eine bestimmte Zeit (1. Wartezeit) innerhalb der Sperrzone liegt, beispielsweise 0,1 bis 10 Sekunden. Dies ist ausreichend, da Torsionsschwingungen erst nach einiger Zeit einsetzen.

Vorzugsweise wird nach Verlassen der Sperrzone das Antriebsmoment erst nach einer zweiten Wartezeit, wieder erhöht. Da Torsionsschwingungen einer starken räumlichen und zeitlichen Varianz unterliegen, erhöht die zweite Wartezeit die Wahrscheinlichkeit, dass der Arbeitspunkt nach der Erhöhung nicht wieder in der Sperrzone liegt. Nach der zweiten Wartezeit können sich weitere Randbedingungen wie Schienenzustand oder Feuchtigkeit so weit geändert haben, dass der Arbeitspunkt bei der Erhöhung des Antriebsmoments nur eine kurze Zeit oder gar nicht die Sperrzone durchläuft. Die zweite Wartezeit kann im Bereich 1 bis 30 Sekunden, vorzugsweise 1 bis 10 Sekunden liegen.

Die Erhöhung des Antriebsmoments kann kontinuierlich oder stufenweise erfolgen, vorzugsweise durch einen Schlupfregler. Ferner kann die Reduzierung des Antriebsmoments kontinuierlich oder stufenweise erfolgen, vorzugsweise durch einen Schlupfregler.

Wenn der Arbeitspunkt beim Erhöhen des Antriebsmoments wieder in die Sperrzone gelangt, kann das Verfahren erneut durchgeführt werden, insbesondere, wenn er länger als eine dritte Wartezeit innerhalb der Sperrzone liegt. Die dritte Wartezeit ist vorzugsweise gleich oder ähnlich der ersten Wartezeit.

Die Sperrzone kann insbesondere durch Simulation ermittelt werden, wobei Parameter des jeweiligen Schienenfahrzeugs in die Simulation einfließen. Beispielsweise beeinflussen Gewicht, Trägheiten, Steifigkeiten, Dämpfungen, Architektur des Schienenfahrzeugs das Simulationsergebnis. Die Simulationsrechnungen erfolgen vorzugsweise auf Basis von Mehrkörpermodellen und bekannten Kraftschluss-Kennlinien. Die Sperrzone kann auch empirisch festgelegt werden, indem die Arbeitspunkte im Kraftschlussdiagramm ermittelt werden, bei denen vermehrt Torsionsschwingungen mit großer Amplitude auftreten (die also gesperrten Arbeitspunkten entsprechen). Die Grenzen der Sperrzone können von weiteren Parametern abhängen, beispielsweise der Geschwindigkeit des Fahrzeugs.

Ferner kann das Verfahren verbessert werden, wenn neben dem Schlupf bzw. der Schlupfgeschwindigkeit und dem Kraftschlussbeiwert weitere Zustandsgrößen der Fahrzeugsteuerung als Indikator für gefährliche Zustände, d.h. Zustände mit erhöhter Gefahr für das Auftreten von Torsionsschwingungen, berücksichtigt werden. Als weitere Zustandsgröße kann beispielsweise das Rauschen der Raddrehzahlen berücksichtigt werden.

Es ist vorteilhaft, wenn eine Anzeige für den Fahrzeugführer vorhanden ist, die die Durchführung des Verfahrens signalisiert und/oder die signalisiert, wenn der aktuelle Arbeitspunkt in der Sperrzone liegt. Zusätzlich kann vorgesehen sein, dass der Fahrzeugführer die Durchführung des Verfahrens abschalten kann, so dass das Verfahren während der Ausführung unterbrochen oder abgebrochen wird oder nicht startet, wenn der aktuelle Arbeitspunkt in der Sperrzone liegt.

Ferner liegt es im Rahmen der Erfindung, dass eine Abschaltung des Verfahrens rechnergesteuert in bestimmten Fahrsituationen, beispielsweise bei Gefahrbremsungen oder dem Anfahren bei maximaler Zuladung erfolgt.

Es kann aufgezeichnet werden, zu welchen Zeiten und/oder an welchen Orten eine Durchführung des erfindungsgemäßen Verfahrens erfolgt, sowie dabei auftretende Werte von weiteren Parametern. Damit kann eine sogenannte Adhäsionslandkarte erstellt werden, die Bedingungen angibt, die mit einer erhöhten Gefahr von Torsionsschwingungen verbunden sind. Diese Daten können im Fahrzeug gespeichert und/oder auf die Landseite übertragen werden.

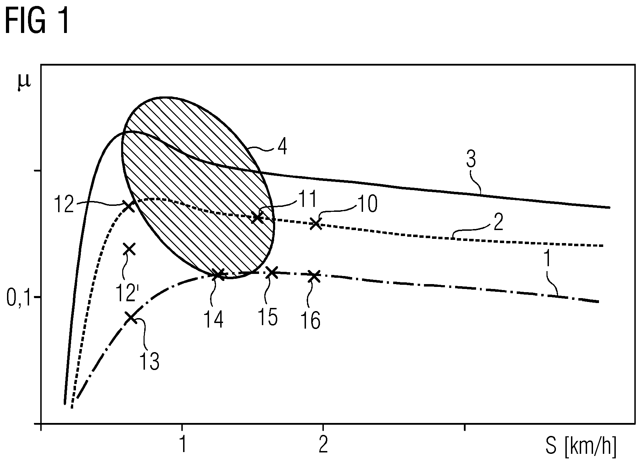

Die Erfindung wird im Folgenden anhand eines in der Figur dargestellten Ausführungsbeispiels näher erläutert. Es zeigt
Fig.1: ein Kraftschlussdiagramm mit drei Kraftschluss-Kennlinien des Rad-Schiene-Kontakts für ein Schienenfahrzeug.

Fig.1 zeigt ein Kraftschlussdiagramm für ein Schienenfahrzeug, das einen elektrischen Antrieb aufweist. Das Schienenfahrzeug weist ferner angetriebene und nicht-angetriebene Radsätze auf. Das Antriebsmoment des elektrischen Antriebs mit entsprechenden Sensoren wird gemessen, ebenso die Umfangsgeschwindigkeit der angetriebenen Räder und Geschwindigkeit des Schienenfahrzeugs. Damit kann die Schlupfgeschwindigkeit für ein oder mehrere angetriebene Räder oder Radsätze ermittelt werden. Unter Verwendung weiterer Fahrzeugdaten, wie beispielsweises dessen Masse, können mithilfe dem Fachmann bekannter Verfahren und Modelle die Kraftschluss-Kennlinien, d.h. die Abhängigkeit des Kraftschlussbeiwerts µ als Funktion der Schlupfgeschwindigkeit für verschiedene Randbedingungen (Rad-Schiene-Zwischenschichten, Umgebungsbedingungen etc.), bestimmt werden.

In der Figur sind drei Kraftschluss-Kennlinien 1, 2, 3 dargestellt, die schlechte Reibverhältnisse (Kennlinie 1), mittlere (Kennlinie 2) und gute Reibverhältnisse (Kennlinie 3) repräsentieren. Schlechte Reibverhältnisse ergeben sich beispielsweise bei nasser Schiene.

Im Kraftschlussdiagramm ist eine Sperrzone 4 angegeben, die eine Menge oder einen Bereich von Wertepaaren (µ, S) umfasst, es handelt sich demnach um Arbeitspunkte, die im Betrieb auftreten können. Diese Arbeitspunkte in der Sperrzone zeichnen sich dadurch aus, dass sie mit einer erhöhten Gefahr des Auftretens von Torsionsschwingungen verbunden sind, d.h. bei diesen Arbeitspunkten entstehen vermehrt und/oder stärkere Torsionsschwingungen. Diese sogenannten gesperrten Arbeitspunkte können durch Messungen während einer Messfahrt bestimmt werden, oder mithilfe von Simulationsrechnungen auf Basis von Mehrkörpermodellen und bekannten Kraftschluss-Kennlinien.

Nachdem die Sperrzone bekannt ist, kann während des Betriebs des Schienenfahrzeugs das Auftreten von Torsionsschwingungen gemäß einer Ausführungsform wie folgt vermieden werden:
Während der Fahrt wird der aktuelle Arbeitspunkt kontinuierlich oder zumindest in ausreichend kurzen Intervallen bestimmt. Hierzu werden die erfassten Daten wie oben beschrieben verwendet. Eine Sollschlupfgeschwindigkeit und eine maximale Radschlupfgeschwindigkeit werden definiert und durch einen Schlupfregler geregelt bzw. begrenzt; im gezeigten Beispiel liegt die Sollschlupfgeschwindigkeit bei etwa 2 km/h. Für den ermittelten aktuellen Arbeitspunkt wird geprüft, ob er innerhalb der Sperrzone 4 liegt. In der Figur ist ein aktueller Arbeitspunkt 10 dargestellt, der außerhalb der Sperrzone liegt und einem Zeitpunkt t0 entspricht, sowie ein aktueller Arbeitspunkt 11 zu einem späteren Zeitpunkt t1, der innerhalb der Sperrzone liegt. Wenn der aktuelle Arbeitspunkt 11 einen längeren Zeitraum als eine vorgegebene erste Wartezeit innerhalb der Sperrzone 4 liegt, wird das Antriebsmoment des Rades bzw. des Radsatzes verringert, wodurch sich auch der Schlupf verringert. Der Arbeitspunkt verschiebt sich daher. Das Antriebsmoment wird so lange und/oder so stark verringert, bis der aktuelle Arbeitspunkt zum Zeitpunkt t2 außerhalb der Sperrzone liegt. In vielen Fällen liegt er dann auf der linken Seite der Sperrzone, d.h. bei einer geringeren Schlupfgeschwindigkeit, wie in der Figur als Arbeitspunkt 12 oder Arbeitspunkt 12' zum Zeitpunkt t2 dargestellt. Je nach den Umgebungs- und Randbedingungen liegt er auf derselben Kennlinie wie vorher (Arbeitspunkt 12), oder auf einer davon verschiedenen (Arbeitspunkt 12'). Beispielsweise kann er durch Zunahme der Feuchtigkeit auf einer Kennlinie liegen, die zwischen der Kennlinie 1 (geringe Reibkräfte) und Kennlinie 2 (mittlere Reibkräfte) liegt und nicht dargestellt ist.

Nach einer vorgegebenen zweiten Wartezeit wird das Antriebsmoment wieder erhöht. Im Ausführungsbeispiel hat sich der aktuelle Arbeitspunkt während der zweiten Wartezeit durch Änderung der Zwischenschicht im Rad-Schiene-Kontakt verschoben und liegt an deren Ende (Zeitpunkt t3) auf der Kennlinie 1 (Arbeitspunkt 13). Die zweite Wartezeit liegt vorzugsweise im Bereich von 1sec bis 10 sec.

Wenn sich die Umgebungsbedingungen nicht wesentlich ändern, wird beim Erhöhen des Antriebsmoments die Kraftschluss-Kennlinie 1 durchlaufen. Zum Zeitpunkt t4 liegt der aktuelle Arbeitspunkt 14 wieder in der Sperrzone. Die Sperrzone wird im weiteren Verlauf aber schon nach kurzer Zeit wieder verlassen, und zum Zeitpunkt t5 liegt der Arbeitspunkt 15 wieder außerhalb der Sperrzone. Das Antriebsmoment wird weiter erhöht, bis der gewünschte Fahrzustand bei t6, Arbeitspunkt 16, wieder erreicht ist.

Beim Erhöhen des Antriebsmoments nach der zweiten Wartezeit wird überwacht, ob der Arbeitspunkt wieder die Sperrzone erreicht. Wenn der aktuelle Arbeitspunkt länger als eine vorgegebene dritte Wartezeit in der Sperrzone liegt, wird das Antriebsmoment reduziert, und der Verfahrenszyklus erneut durchgeführt, d.h. das Antriebsmoment wird reduziert, bis der aktuelle Arbeitspunkt außerhalb der Sperrzone 4 liegt. Die dritte Wartezeit stimmt vorzugsweise mit der ersten Wartezeit überein. Bei der erneuten Durchführung des Verfahrenszyklus können andere Wartezeiten gewählt werden.

Vorzugsweise wird dem den Fahrzeugführer an einer Anzeige signalisiert, ob der aktuelle Arbeitspunkt innerhalb der Sperrzone liegt. Alternativ oder zusätzlich kann signalisiert werden, dass der Verfahrenszyklus zwischen den Zeitpunkten t1 und t5 oder t6 durchlaufen wird, d.h. dass das Antriebsmoment gesteuert wird, um die Sperrzone möglichst schnell zu durchlaufen. Ferner kann vorgesehen sein, dass der Fahrzeugführer die Durchführung des Verfahrens abschalten kann, also unterbrechen, abbrechen oder verhindern kann. Damit kann der Fahrzeugführer auf besondere Fahrsituationen, wie Weichenbereiche, reagieren. Des Weiteren kann auf besondere Zustände des Fahrzeugs, wie eine Gefahrenbremsung, durch automatisches Abschalten des Verfahrens reagiert werden.

Mit der Erfindung kann auf zusätzliche Komponenten verzichtet werden, die für die bekannten Maßnahmen zum Torsionsschwingungsschutz notwendig sind. So können Sensorik, Drehzahlgeber, Bauraum und Auswerteeinheiten ebenso eingespart werden wie die damit verbundenen Wartungskosten. Es wird ein einfacherer und leichterer Aufbau ermöglicht.

Die Anwendung des Verfahrens erhöht zudem die Sicherheit. Bei bekannten Verfahren vergeht eine Zeitdauer zwischen Aufklingen der Torsionsschwingung, der Erkennung und der Reaktion des jeweiligen Regelverfahrens, so dass relevante Torsionsmomente auftreten können. Durch das schnelle Durchlaufen der Sperrzone beim erfindungsgemäßen Verfahren entstehen Torsionsschwingungen in der Regel gar nicht erst.

Ferner versagen bekannte Schutzmaßnahmen bei bestimmten konstruktiven Lösungen, beispielsweise bei einer mittigen Einleitung des Antriebsmoments des Motors auf die Radsatzwelle, welches sich in einem Schwingungsknoten befindet und die Torsionsschwingungserkennung am Motor verhindert. Auch in solchen Situationen ist die erfindungsgemäße Lösung realisierbar.

Ein weiterer Vorteil besteht in der Erleichterung des Fahrzeugzulassungsverfahrens, da die notwendigen Messungen aufgrund der fehlenden oder sehr niedrigen auftretenden Torsionsschwingungen schneller durchgeführt werden können.

## Patentansprüche

1. Verfahren zur Steuerung des Antriebs eines Schienenfahrzeugs, wobei zum Vermeiden des Einsetzens von Torsionsschwingungen eines angetriebenen Radsatzes während des Betriebs des Schienenfahrzeugs
a) in einem Kraftschlussdiagramm des Schienenfahrzeugs eine Sperrzone (4) mit Wertepaaren (µ, S) bestimmt wird oder vorgegeben ist, wobei µ der Kraftschlussbeiwert ist und S die Schlupfgeschwindigkeit ist,
in welcher Torsionsschwingungen mit einer höheren Wahrscheinlichkeit auftreten,
b) der aktuelle Arbeitspunkt (10, 11) eines Rades des Radsatzes ermittelt wird und mit der Sperrzone (4) verglichen wird,
c) wenn der aktuelle Arbeitspunkt (10, 11) in der Sperrzone (4) liegt, das Antriebsmoment reduziert wird, bis der aktuelle Arbeitspunkt (12) außerhalb der Sperrzone (4) liegt,
d) und das Antriebsmoment wieder erhöht wird.

2. Verfahren nach Anspruch 1, **dadurch gekennzeichnet, dass** im Schritt c) das Antriebsmoment nur dann reduziert wird, wenn der aktuelle Arbeitspunkt (11) für die Dauer einer ersten Wartezeit in der Sperrzone (4) liegt.

3. Verfahren nach einem der vorhergehenden Ansprüche, **dadurch gekennzeichnet, dass** eine zweite Wartezeit zwischen Schritt c) und Schritt d) liegt.

4. Verfahren nach einem der vorhergehenden Ansprüche, **dadurch gekennzeichnet, dass** das Antriebsmoment in Schritt d) auf die ursprüngliche Vorgabe erhöht wird.

5. Verfahren nach einem der vorhergehenden Ansprüche, **dadurch gekennzeichnet, dass** bei der Erhöhung des Antriebsmoments in Schritt d) überwacht wird, ob der aktuelle Arbeitspunkt (14) länger als eine dritte Wartezeit in der Sperrzone (4) liegt.

6. Verfahren nach einem der vorhergehenden Ansprüche, **dadurch gekennzeichnet, dass** an einer Anzeige signalisiert wird, ob der aktuelle Arbeitspunkt (10, 11, 12, 13, 14, 15, 16) innerhalb der Sperrzone (4) liegt.

7. Verfahren nach einem der vorhergehenden Ansprüche, **dadurch gekennzeichnet, dass** an einer Anzeige ein Signal ausgegeben wird, während Schritt c) und/oder Schritt d) durchgeführt werden.

8. Verfahren nach einem der vorhergehenden Ansprüche, **dadurch gekennzeichnet, dass** die Durchführung des Verfahrens durch Fahrzeugführer und/oder rechnergesteuert unterbrochen, beendet oder verhindert werden kann.

9. Verfahren nach einem der vorhergehenden Ansprüche, **dadurch gekennzeichnet, dass** bei der Bestimmung der Sperrzone (4) weitere Zustandsgrößen verwendet werden.

10. Verfahren nach Anspruch 9, **dadurch gekennzeichnet, dass** als weitere Zustandsgröße eine Geschwindigkeit des Schienenfahrzeugs oder ein Rauschen der Raddrehzahlen verwendet wird.

11. Verfahren nach einem der vorhergehenden Ansprüche,
**dadurch gekennzeichnet, dass** die Sperrzone (4) durch Simulation und/oder experimentell bestimmt wird.

12. Verfahren nach einem der vorhergehenden Ansprüche,
**dadurch gekennzeichnet, dass** gespeichert wird, zu welchen Zeiten und/oder an welchen Orten eine Durchführung des erfindungsgemäßen Verfahrens erfolgt.

## Claims

1. Method for controlling the drive of a rail vehicle, wherein in order to avoid the onset of torsion vibrations of a driven wheelset during the operation of the rail vehicle
a) a prohibited area (4) with value pairs (µ, S) is ascertained or predetermined in a frictional connection diagram of the rail vehicle, wherein µ is the frictional connection constant and S is the slip speed, in which torsion vibrations occur with a higher probability,
b) the current working point (10, 11) of a wheel of the wheelset is determined and compared with the prohibited area (4),
c) when the current working point (10, 11) is in the prohibited area (4), the drive torque is reduced until the current working point (12) is outside of the prohibited area (4),
d) and the drive torque is increased again.

2. Method according to claim 1, **characterised in that** in step c), the drive torque is only then reduced when the current working point (11) is in the prohibited area (4) for the duration of a first waiting time.

3. Method according to one of the preceding claims, **characterised in that** a second waiting time is between step c) and step d).

4. Method according to one of the preceding claims, **characterised in that** the drive torque in step d) is increased to the original specification.

5. Method according to one of the preceding claims, **characterised in that** when the drive torque is increased in step d), a check is carried out to determine whether the current working point (14) is in the prohibited area (4) for longer than a third waiting time.

6. Method according to one of the preceding claims, **characterised in that** it is signalled on a display whether the current working point (10, 11, 12, 13, 14, 15, 16) is within the prohibited area (4).

7. Method according to one of the preceding claims, **characterised in that** a signal is output on a display, while step c) and/or step d) are carried out.

8. Method according to one of the preceding claims, **characterised in that** the implementation of the method can be interrupted, ended or prevented by the vehicle driver and/or in a computer-assisted manner.

9. Method according to one of the preceding claims, **characterised in that** further status variables are used when the prohibited area (4) is determined.

10. Method according to claim 9, **characterised in that** a speed of the rail vehicle or a noise of the wheel speeds is used as further status variables.

11. Method according to one of the preceding claims, **characterised in that** the prohibited area (4) is ascertained by simulation and/or experimentally.

12. Method according to one of the preceding claims, **characterised in that** the times and/or locations at which the inventive method is implemented are saved.

## Revendications

1. Procédé de commande de l'entraînement d'un véhicule ferroviaire, dans lequel, pour empêcher l'apparition de vibrations de torsion d'un essieu entraîné pendant le fonctionnement du véhicule ferroviaire,
a) dans un diagramme de coopération de force du véhicule ferroviaire, on détermine ou on prescrit une zone (4) de blocage par des paires (µ, S) de valeurs, dans lequel µ est le coefficient de coopération de force et S est la vitesse de glissement, dans laquelle des vibrations de torsion se produisent avec une probabilité assez grande,
b) on détermine le point (10, 11) de travail en cours d'une roue de l'essieu et on le compare à la zone (4) de blocage,
c) si le point (10, 11) de travail en cours est dans la zone (4) de blocage, on réduit le couple d'entraînement, jusqu'à ce que le point (12) de travail en cours soit à l'extérieur de la zone (4) de blocage,
d) et on réaugmente le couple d'entraînement.

2. Procédé suivant la revendication 1, **caractérisé en ce que**, dans le stade c), on ne réduit le couple d'entraînement que si le point (11) de travail en cours est, pendant la durée d'un premier temps d'attente, dans la zone (4) de blocage.

3. Procédé suivant l'une des revendications précédentes, **caractérisé en ce qu'**un deuxième temps d'attente est intercalé entre le stade c) et le stade d).

4. Procédé suivant l'une des revendications précédentes, **caractérisé en ce que** l'on augmente le couple d'entraînement dans le stade d) jusqu'à la prescription d'origine.

5. Procédé suivant l'une des revendications précédentes, **caractérisé en ce que**, lors de l'augmentation du couple d'entraînement dans le stade d), on surveille si le point (14) de travail en cours est plus long qu'un troisième temps d'attente dans la zone (4) de blocage.

6. Procédé suivant l'une des revendications précédentes, **caractérisé en ce que** l'on signale sur un affichage si le point (10, 11, 12, 13, 14, 15, 16) de travail en cours est dans la zone (4) de blocage.

7. Procédé suivant l'une des revendications précédentes, **caractérisé en ce que** l'on émet un signal sur un affichage pendant que l'on effectue le stade c) et/ou le stade d).

8. Procédé suivant l'une des revendications précédentes, **caractérisé en ce que** l'exécution du procédé peut être interrompue, il peut y être mis fin ou être empêchée par le conducteur du véhicule et/ou d'une manière commandée par ordinateur.

9. Procédé suivant l'une des revendications précédentes, **caractérisé en ce que**, lors de la détermination de la zone (4) de blocage, on utilise d'autres grandeurs d'état.

10. Procédé suivant la revendication 9, **caractérisé en ce que** l'on utilise, comme autre grandeur d'état, une vitesse du véhicule ferroviaire ou un bruit des vitesses de rotation de roues.

11. Procédé suivant l'une des revendications précédentes, **caractérisé en ce que** l'on détermine la zone (4) de blocage par simulation et/ou expérimentalement.

12. Procédé suivant l'une des revendications précédentes, **caractérisé en ce que** l'on met en mémoire les temps et/ou les lieux où un procédé suivant l'invention a été effectué.
